# EUROPÄISCHE PATENTSCHRIFT

(11) **EP 1 812 766 B1**
(45) Veröffentlichungstag und Bekanntmachung des Hinweises auf die Patenterteilung: **10.04.2013**
(21) Anmeldenummer: 05811072.7
(22) Anmeldetag: 03.11.2005
(51) Int. Cl.: F27D 15/02, F27B 7/38, F27D 19/00, F27D 21/00, C04B 7/47, F28C 3/16, F26B 17/26, F26B 3/08, F28F 27/02

(54) **VERFAHREN ZUR REGELUNG DES BETRIEBES EINES SCHÜTTGUTROSTKÜHLERS**
METHOD FOR CONTROLLING THE OPERATION OF A BULK GOOD GRATE COOLER
PROCEDE POUR REGULER LE FONCTIONNEMENT D'UN REFROIDISSEUR A GRILLE DE MATIERES EN VRAC

(30) Priorität: 11.11.2004 DE 102004054417
(43) Veröffentlichungstag der Anmeldung: 01.08.2007
(73) Patentinhaber: KHD Humboldt Wedag GmbH, 51067 Köln (DE)
(72) Erfinder: MERSMANN, Matthias, B-4731 Lichtenbusch (BE); SCHINKE, Karl, 50937 Köln (DE); BINNINGER, Thomas, Alpharetta, GA 30022 (US)
(86) Internationale Anmeldenummer: PCT/EP2005/011756
(87) Internationale Veröffentlichungsnummer: WO 2006/050851

(56) Entgegenhaltungen:
- EP-A- 0 442 129
- EP-A- 0 943 881
- DE-A1- 10 019 971
- US-A- 3 037 528
- US-A- 3 540 484
- US-A- 3 955 595
- PATENT ABSTRACTS OF JAPAN Bd. 2002, Nr. 02, 2. April 2002 (2002-04-02) & JP 2001 302294 A (SUMITOMO OSAKA CEMENT CO LTD), 31. Oktober 2001 (2001-10-31)

## Beschreibung

Die Erfindung betrifft ein Verfahren zur Regelung des Betriebes eines Schüttgutrostkühlers zur Kühlung eines heißen Schüttgutes wie z. B. Zementklinker, der vom Schüttguteintragsende durch geeignete Fördermittel zum Kühlgutaustragsende bewegt wird, während der Kühlrost und das auf diesem verteilte heiße Schüttgutbett im wesentlichen von unten nach oben von Kühlluftströmungen durchsetzt werden, die durch unterhalb des Kühlrostes angeordnete Regelungsvorrichtungen geregelt werden.

Bei einer Zementklinkerproduktionslinie wird der in einem Drehrohrofen aus calciniertem Zementrohmehl erbrannte heiße Zementklinker aus dem Ofenaustragsende auf einen Kühler, in der Regel auf den Kühlrost eines Rostkühlers abgeworfen, auf diesem verteilt und durch geeignete Fördermittel in Längsrichtung zum Kühleraustragsende bewegt, wobei der Kühlrost und die heiße Schüttgutschicht im wesentlichen von unten nach oben von Kühlluftströmungen durchsetzt werden. Nachfolgend werden die bekannten Rostkühlertypen kurz erläutert.

Bei einem Schubrostkühler wechseln sich in Förderrichtung gesehen ortsfeste Rostplattenreihen mit hin- und herbeweglichen Rostplattenreihen ab, alle Rostplatten sind mit Kühlluftöffnungen versehen und sie werden im wesentlichen von unten nach oben von Kühlluft durchströmt, und durch die gemeinsam oszillierende Bewegung aller beweglichen Rostplattenreihen wird das zu kühlende heiße Gut schubweise transportiert und dabei gekühlt. Als eine Alternative zu einem solchen Schubrostkühler ist z. B. aus der EP-B-1 021 692 ein Rostkühlertyp bekannt, bei dem der von Kühlluft durchströmte Kühlrost nicht bewegt wird, sondern feststeht, wobei oberhalb der feststehenden Rostfläche mehrere Reihen benachbarter hin- und herbeweglicher balkenförmiger Schubelemente angeordnet sind, die zwischen einer Vorhubposition in Kühlguttransportrichtung und einer Rückhubposition bewegt werden, so dass durch die Hin- und Herbewegung dieser Schubelemente im abzukühlenden Gutbett das Gutmaterial ebenfalls vom Kühleranfang zum Kühlerende sukzessive bewegt und dabei gekühlt wird.

Bei derartigen Rostkühlern lassen sich Ungleichverteilungen im heißen Schüttgutbett hinsichtlich Schüttgutbetthöhe, Klinkerkorngröße, Temperaturprofil etc. nicht immer vermeiden, was eine ungleichmäßige Kühlung zur Folge hat. Denn in Kühlrostbereichen mit größerer Schüttgutbetthöhe steigt der Strömungswiderstand für die Kühlluft, es sinkt die Strömungsgeschwindigkeit und es wird weniger Kühlluft durch das Schüttgutbett geleitet, und umgekehrt fällt in Kühlrostbereichen mit niedriger Schüttgutbetthöhe der Strömungswiderstand für die Kühlluft, deren Strömungsgeschwindigkeit und die Gefahr eines Luftdurchbruchs nehmen zu, und es wird eine zu hohe Kühlluftmenge gerade durch solche Schüttgutbettbereiche geleitet, welche die geringste Kühlluftmenge benötigen würden.

Es ist daher bei einem Rostkühler zur Kühlung von heißem Schüttgut wie Zementklinker bekannt (EP-B-0 848 646), in den Kühlluftzuströmungen unterhalb des Kühlrostes die jeweilige Kühlluftmenge selbsttätig jeweils so zu regeln, dass bei beginnendem Anstieg der Kühlluftdurchflussmenge, hervorgerufen durch geringer werdende Kühlgutbetthöhe und abnehmendem Strömungswiderstand, die lichte Querschnittsfläche der jeweiligen Kühlluftzuströmungsleitungen reduziert wird und umgekehrt, um auf diese Weise einen wechselnden Druckabfall über das Kühlgutbett auszugleichen, so dass die jeweilige Kühlluftmenge nicht mehr abhängig ist vom jeweiligen Druckverlust bzw. Strömungswiderstand der Kühlluft in der jeweiligen Kühlgutbettzone. Dabei arbeitet der bekannte mechanische Kühlluft-Durchflussmengenstromregler mit einer gewichtsbelasteten Pendelklappe mit horizontal liegender Schwenkachse, wobei die Pendelklappe je nach den vorherrschenden Druckbedingungen und Strömungsverhältnissen die jeweilige Kühlluftzuströmung mehr oder weniger stark selbsttätig drosselt. Würde man die bekannte Kühlluft-Regelungsvorrichtung, die mit einem rein durch Schwerkraft betätigten Schwenkhebelgewicht mit Anströmkörper selbsttätig arbeitet, unterhalb des Kühlrostes in den Kühlluftzuströmungen von Kühlrostzonen anordnen, die nicht feststehen, sondern die wie bei einem Schubrostkühler zwecks Schüttguttransports samt Regelungsvorrichtungen hin- und herbewegt werden, so würde die selbsttätige Regelung der Regelungsvorrichtung durch die hin- und hergehende Schüttelbewegung gestört und das Regelungsergebnis dadurch verfälscht werden.

Die oben genannte selbsttätig arbeitende Kühlluftregelung eines Rostkühlers läuft auf die Regelung eines im wesentlichen konstant bleibenden Volumenstroms der Kühlluft hinaus. Auf individuelle Kühlbedürfnisse in unterschiedlichen Zonen des in der Praxis oft sehr langen und breiten Rostkühlers, auf die mit einer Konstantregelung des Kühlluftvolumenstroms nicht mehr optimal reagiert werden kann, nimmt die bekannte Rostkühlerregelung keine Rücksicht. Eine bedarfsgerechte Änderung der Kühlluft-Volumenströme in den einzelnen Zonen des Rostkühlers während dessen Betriebes ist bei den bekannten Rostkühlern nicht möglich.

Aus der EP-A-0 943 881 ist ferner bekannt, bei einem Rostkühler in Abhängigkeit sowohl von der Höhe des Kühlgutbettes als auch vom Kühlluftdurchströmungswiderstand im Anfangsbereich des Kühlers die Fördergeschwindigkeit des Rostkühlers zu regeln. Diese Regelung läuft auf eine Vergleichmäßigung der Kühlgutbetthöhe hinaus. Bei der Messung des Durchströmungswiderstandes wird in der Regel auf den sogenannten Kammerdruck in den Luftkammern unterhalb des Kühlrostes zurückgegriffen. Da diese in Kühlerlängsrichtung betrachtet hintereinander liegenden Kühlluftkammern aber groß sind, wobei die Luftkammergröße zum Kühlerende hin in der Regel noch zunimmt, ist der gemessene Kammerdruck auch in Verbindung mit der gemessenen Schüttgutbetthöhe nicht mehr unbedingt repräsentativ für den in einer Zone des Rostkühlers gerade aktuellen Kühlluftbedarf.

Die deutsche Offenlegungsschrift DE 100 19 971 A1 lehrt die Verwendung von Dosiervorrichtungen, im Wesentlichen Stellventile, unter individuellen Rostplatten zur Vergleichmäßigung des Temperaturprofils des Kühlgutbetts; wobei diese Stellventile zur Begrenzung der durch den Kühlrost durchströmenden dienen. Diese Stellventile werden zu Gruppen zusammengefasst und eine Gruppe ist in Längsrichtung oder in Querrichtung des Rostkühlers zusammengefasst.

Die europäische Patentanmeldung EP 0 943 881 A1 lehrt ein Verfahren zum Regeln der gesamten Fördergeschwindigkeit eines Rostkühlers abhängig vom Zustand des Kühlgutbetts. Dabei wird als Regeleingangsgröße sowohl die Höhe des Kühlgutbetts wie auch der Durchströmungswiderstand verwendet.

Schließlich lehrt die europäische Patentanmeldung EP 0 442 129 A1 ein Verfahren zum Kühlen einer bewegten Schicht von heißem Kühlgut, wobei einzelne Zonen mit erhöhter Temperatur durch Stoßweises belüften zusätzlich gekühlt wie auch umgeschichtet werden. Der Erfindung liegt die Aufgabe zugrunde, den Betrieb eines Schüttgutrostkühlers zur Kühlung von z. B. heißem Zementklinker derart prozessgesteuert zu regeln, dass in allen Zonen des Kühlrostes die Kühlluft-Volumenströme und/oder deren Verweildauer in der jeweiligen Zone des Kühlgutbetts auf den je Zone auftretenden Kühlbedarf abstimmbar sind.

Diese Aufgabe wird gemäß der Erfindung mit einem Verfahren mit den Merkmalen des Anspruchs 1 gelöst. Vorteilhafte Weiterbildungen der Erfindung sind in den Unteransprüchen angegeben.

Während die bekannten Regelungsverfahren eines Schüttgutrostkühlers die Möglichkeit bieten, dass der Kühlluft-Volumenstrom in allen Zonen des Kühlers im wesentlichen konstant gehalten wird, bietet das erfindungsgemäße Verfahren zur Regelung des Betriebes eines Schüttgutrostkühlers die Möglichkeit, die jeweiligen Zonen des Rostkühlers je nach Wärmeinhalt des darin enthaltenen heißen Schüttgutbetts kühlungsbedarfsgerecht geregelt mit Kühlluftströmungen zu versorgen. Dies geschieht dadurch, dass erfindungsgemäß während des Betriebes des Rostkühlers ein Regeleingriff auf den jeweiligen örtlichen Kühlluft-Volumenstrom und/oder auf die jeweilige örtliche Fördergeschwindigkeit des Kühlrostes erfolgt in Abhängigkeit der jeweiligen örtlichen zonenweise gemessenen Schüttgutbetthöhe und/oder Schüttgutbetttemperatur und/oder des Kühlluft-Durchströmungswiderstandes in der Weise, dass bei einer Änderung eines oder mehrerer der gemessenen Parameter Betthöhe, Betttemperatur und Durchströmungswiderstand der jeweilige örtliche Kühlluft-Volumenstrom und/oder die Fördergeschwindigkeit des Rostsystems geändert wird.

So kann bei einem Ansteigen der Parameter Betthöhe und/oder Betttemperatur und/oder Durchströmungswiderstand der jeweilige örtliche Kühlluft-Volumenstrom erhöht werden, und umgekehrt, während ein Ansteigen der Betttemperatur insbesondere an der Bettoberseite mit Gefahr einer sogenannten "Red River"-Bildung zum Anlass genommen werden kann, die Fördergeschwindigkeit des Rostsystems zu reduzieren, und umgekehrt.

Es besteht die Möglichkeit, die drei in Betracht gezogenen Messgrößen Schüttgutbetthöhe, Schüttgutbetttemperatur und Durchströmungswiderstand, wobei es sich dabei um den gemessenen Druckunterschied der jeweiligen Kühlluftströmung zwischen Unterseite und Oberseite des jeweiligen Kühlluft-Volumenstromreglers handeln kann, zu einer neuen kombinierten Messgröße miteinander zu verknüpfen. Es besteht aber auch die Möglichkeit, eine oder zwei der Messgrößen als Führungsgrößen und die übrigen Messgrößen als Korrekturgrößen bei der erfindungsgemäßen Regelung zu verwenden.

Der Durchströmungswiderstand des Schüttgutbetts insbesondere heißen Zementklinkerbetts wird von der Betthöhe, der Granulometrie und der Temperatur des Gutbetts bestimmt. Ein Thermoscanner oder eine Kamera mit Temperaturfelderfassung können Informationen über die tatsächliche Schüttguttemperatur liefern. Damit sind alle wesentlichen Messgrößen erfasst, die für den aktuellen zonenweisen Kühlluftbedarf von Bedeutung sind, um den Betrieb des Rostkühlers kühlungsbedarfsgerecht optimal regeln zu können.

Die bedarfsgerechte Kühlung des Rostkühlers kann auch durch eine Kombination belüftungstechnischer und fördertechnischer Maßnahmen realisiert werden, d. h. durch Regeleingriff auf die Kühlluft-Volumenströme und auf die Fördergeschwindigkeit des Rostsystems, um die Kühlluft-Volumenströme genau auf die in den jeweiligen Zonen des Rostkühlers auftretenden abzuführenden Wärmemengen abstimmen zu können. Zur Regulierung der Fördergeschwindigkeit wird bei einem Schubrostkühler auf die Hublänge und/oder die Hubfrequenz der beweglichen Rostplattenreihen eingegriffen. Dies gilt auch für einen nach dem sogenannten Walking Floor-Förderprinzip arbeitenden Schüttgutrostkühler, bei dem die einzelnen nebeneinander angeordneten das Kühlgut tragenden länglichen Bodenelemente gesteuert gemeinsam nach vorn, aber nicht gemeinsam, sondern zeitlich getrennt voneinander zurückbewegt werden.

Beim erfindungsgemäßen Verfahren wird repräsentativ für den Kühlluft-Durchströmungswiderstand die Druckdifferenz zwischen der Unterseite und der Oberseite der Kühlluft-Regelungsvorrichtungen unterhalb des Kühlrostes in über die Länge und Breite des Kühlrostes verteilten Zonen gemessen. Bei einem Rostkühler, der das Schüttgut schrittweise nach dem Walking Floor-Förderprinzip durch den Kühler fördert, werden die Schüttgutbetthöhen auch auf den in Gutförderrichtung gesehen benachbarten Kühlrostbahnen gemessen, und die Messgrößen werden durch individuelle Ansteuerung der Antriebe der jeweiligen Rostbahnen zur gezielten Querverteilung des Schüttgutbetts über die gesamte Kühlerbreite verwendet. In Verbindung mit einer Temperaturmessung insbesondere auf der Oberseite bzw. in den Oberschichten des Kühlgutbetts kann dabei auch die sogenannte "Red River"-Bildung bei einem Rostkühler zur Abkühlung von glühend heißem Zementklinker unterdrückt werden.

Die Vielzahl der in den Kühlluftzuströmungen eingesetzten Kühlluft-Regelungsvorrichtungen arbeitet mit Regelkennlinien, die insbesondere das Ansteigen des Kühlluftbedarfs mit ansteigender Kühlgutbetthöhe bzw. Kühlgutbetttemperatur bzw. ansteigendem Kühlgutbett-Durchströmungswiderstand für den jeweiligen Kühlluftstrom wiedergeben. Diese Regelkennlinien können nach einem besonderen Merkmal der Erfindung während des Kühlerbetriebes veränderbar sein, indem die Ausgangs-Höhenlage der innerhalb der Reglergehäuse beweglich angeordneten Stellorgane mechanisch verstellt wird.

Die Erfindung und deren weitere Merkmale und Vorteile werden anhand der in den Figuren schematisch dargestellten Ausführungsbeispiele näher erläutert.

Es zeigt:
- Fig. 1:: in perspektivischer Ansicht schematisch den Anfangsbereich eines Rostkühlers zur Abkühlung von heißem aus einem Drehrohrofen ausgetragenen Zementklinker, und
- Fig. 2:: eine Kühlluft-Regelungsvorrichtung, bei der zwecks Einblick in das Innere ein vorderes Teilstück des Reglergehäuses herausgeschnitten ist.

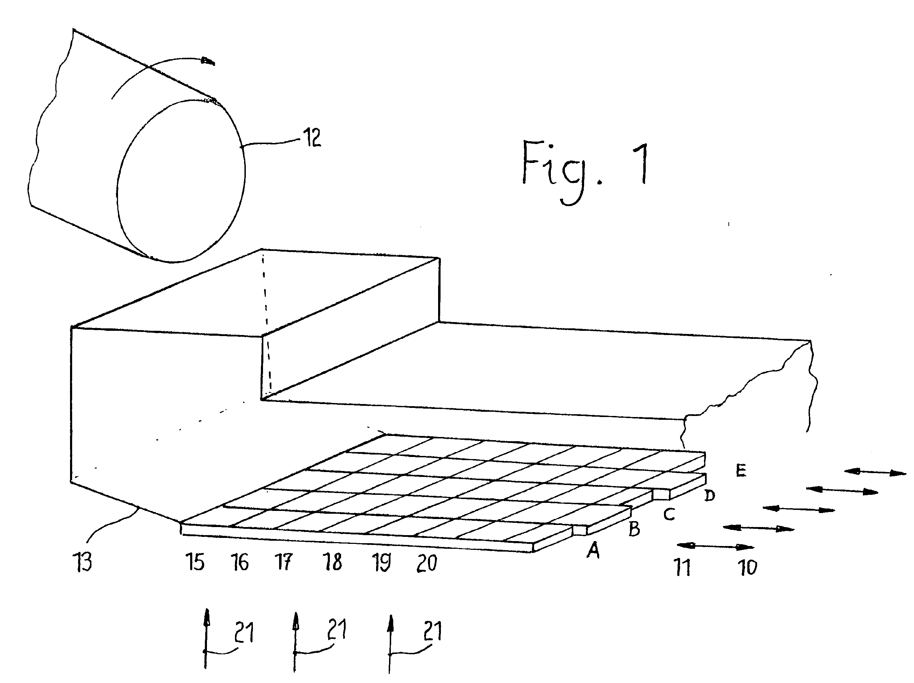

Gemäß Ausführungsbeispiel der Fig. 1 ist der Kühlrost des Rostkühlers wie ein Schachbrett aus einer Vielzahl von hintereinander und nebeneinander angeordneten Kühlrost-Modulen zusammengesetzt, wobei jedes Modul mehrere sich in Kühlerlängsrichtung erstreckende nebeneinander angeordnete längliche etwa trogförmige Bodenelemente aufweist, die unabhängig voneinander zwischen einer Vorhubposition 10 in Kühlguttransportrichtung und einer Rückhubposition 11 gesteuert bewegbar sind, so dass das auf den Bodenelementen gelagerte nicht dargestellte heiße Kühlgut, das aus dem Austragsende eines Drehrohrofens 12 ausgetragen und über eine Gutüberleiteinrichtung 13 zugeführt wird, auf den hin- und her bewegbaren Bodenelementen schrittweise z. B. nach dem Walking Floor-Förderprinzip durch den Kühler gefördert wird. Dabei erfolgt der Antrieb der einzelnen bahnförmigen Bodenelemente der Kühlrostmodule von unterhalb des Kühlrostes über Schubrahmen, die auf Laufrollen abgestützt sind und an denen Arbeitszylinder angreifen, und zwar gesteuert so, dass die Bodenelemente gemeinsam nach vorn, aber nicht gemeinsam, sondern zeitlich getrennt voneinander zurückbewegt werden.

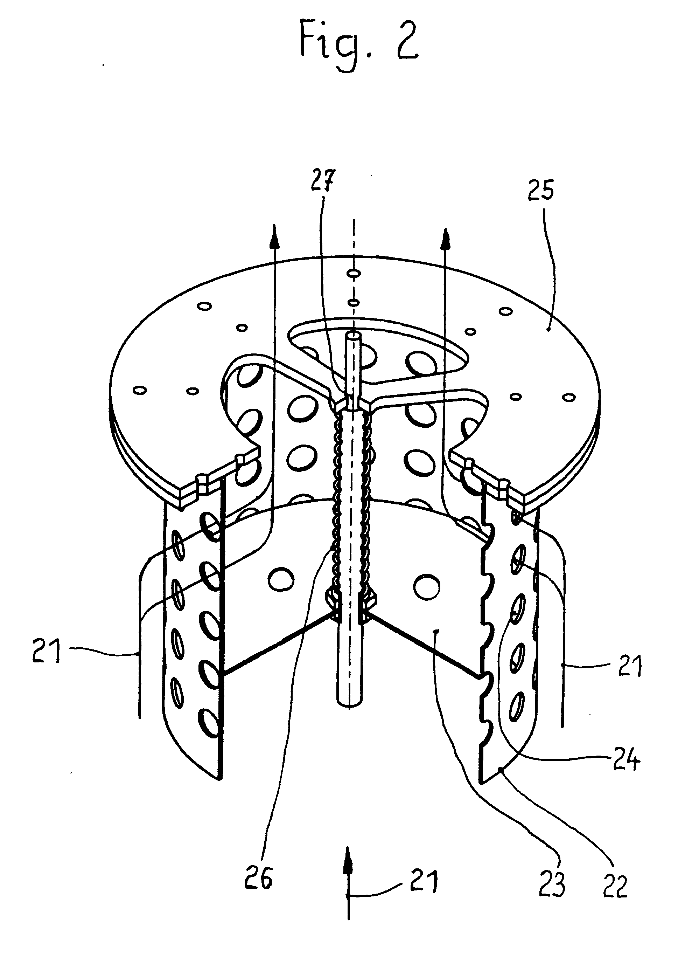

Die Längsbahnen der Kühlrost-Modulreihen sind mit A, B, C, D, E bezeichnet, während die Rostmodul-Querreihen mit 15, 16, 17, 18, 19, 20 etc. bezeichnet sind. Die Bodenelemente aller Kühlrostmodule sind als Hohlkörper ausgebildet, nämlich sie weisen im Querschnitt gesehen eine das Kühlgut tragende und für die Kühlluft im wesentlichen von unten nach oben durchlässige Oberseite und eine davon beabstandete geschlossene den Kühlgut-Rostdurchfall verhindernde Unterseite auf. Dabei weisen die Unterseiten aller Bodenelemente mehrere über die Länge verteilte Kühllufteintrittsöffnungen auf, an denen die Kühlluft-Regelungsvorrichtungen angeflanscht sind, wie ein solches im Ausführungsbeispiel der Fig. 2 zu sehen ist.

Die selbsttätig arbeitende Kühlluft-Regelungsvorrichtung der Fig. 2 weist ein Reglergehäuse 22 und einen darin angeordneten Innenkörper 23 auf. Der z. B. scheibenförmige oder topfförmige Innenkörper 23 ist entgegen der Einwirkung einer Rückstellkraft in dem von der zugeführten Kühlluft 21 durchströmten Reglergehäuse 22 als Stellorgan translatorisch bewegbar verschieblich geführt. Mit zunehmender Höhenlage des von der Kühlluft angeströmten Innenkörpers 23 innerhalb des Reglergehäuses 22 verkleinert sich der freie für die Kühlluft verbleibende Durchströmungsquerschnitt des Reglergehäuses, und umgekehrt.

Eine Änderung des Druckverlustes in der Kühlluftströmung oberhalb des Innenkörpers 23 bzw. eine Änderung der Druckdifferenz zwischen Unterseite und Oberseite des Innenkörpers 23 bewirkt eine axiale Verschiebung des Innenkörpers 23 und damit eine Änderung des Kühlluft-Volumenstroms. Das Reglergehäuse 22 der Fig. 2 weist z. B. eine Vielzahl von über die Höhe und um den Umfang des Gehäuses verteilten Öffnungen 24 auf, wobei Kühlluft 21 durch diese Öffnungen hindurch in das Innere des Gehäuses 22 einströmt und an dessen Oberseite 25, die an die Unterseite der Kühlrostmodule der Fig. 1 angeflanscht ist, über entsprechende Austrittsöffnungen an der Oberseite 25 in den Kühlrost ausströmt. Am Zentrum des als Stellorgan fungierenden Innenkörpers 23 kann eine Rückstellfeder 26 angreifen.

Während des Betriebes des Rostkühlers erfolgt ein Regeleingriff auf den jeweiligen örtlichen Kühlluft-Volumenstrom 21 und/oder auf die jeweilige örtliche Fördergeschwindigkeit des Kühlrostes in Abhängigkeit der jeweiligen örtlichen zonenweise gemessenen Schüttgutbetthöhe und/oder Schüttgutbetttemperatur und/oder des Kühlluft-Durchströmungswiderstandes in der Weise, dass bei einer Änderung einer oder mehrerer der gemessenen Parameter Betthöhe, Betttemperatur und Durchströmungswiderstand der jeweilige örtliche Kühlluft-Volumenstrom und/oder die Fördergeschwindigkeit des Rosts verändert wird.

Die Kühlluft-Volumenströme in den jeweiligen Kühlrostzonen 15 bis 20 und/oder die Fördergeschwindigkeit des Rostkühlers sind durch eine Prozesssteuerung je nach Wärmeinhalt des Schüttgutbetts kühlungsbedarfsgerecht geregelt. Dabei können die Regelkennlinien der in Fig. 2 schematisch dargestellten Kühlluft-Regelungsvorrichtungen 22 einstellbar und veränderbar sein in der Weise, dass die Vorspannkraft wenigstens einer Rückstellfeder 26, die sich am translatorisch verschiebbaren und geführten Innenkörper 23 abstützt, durch Betätigung des Stellmechanismusses 27 einstellbar und veränderbar ist.

## Patentansprüche

1. Verfahren zur Regelung des Betriebes eines Schüttgutrostkühlers zur Kühlung eines heißen Schüttgutes wie z. B. Zernentklinker, der vom Schüttguteintragsende durch geeignete Fördermittel zum Schüttgutaustragsende bewegt wird,
in welchem der Kühlrost (15 - 20) und das auf diesem verteilte heiße Schüttgutbett im wesentlichen von unten nach oben von Kühlluftströmungen (21) durchsetzt werden, die durch unterhalb des Kühlrostes angeordnete Regelungsvorrichtungen (22) geregelt werden,
wobei während des Betriebes des Rostkühlers ein Regeleingriff auf den jeweiligen örtlichen Kühlluft-Volumenstrom (21) und auf die jeweilige örtliche Fördergeschwindigkeit des Kühlrostes erfolgt in Abhängigkeit der jeweiligen örtlichen zonenweise gemessenen Schüttgutbetthöhe und/oder Schüttgutbetttemperatur und/oder des Kühlluft-Durchströmungswiderstandes in der Weise,
dass bei einer Änderung eines oder mehrerer der gemessenen Parameter Betthöhe, Betttemperatur und Durchströmungswiderstand der jeweilige örtlich Kühlluft-Volumenstrom und die Fördergeschwindigkeit geändert wird
**dadurch gekennzeichnet, dass**
die Regelkennlinien eingesetzter Kühlluft-Volumenstromregler (22) während des Kühlerbetriebes veränderbar sind,
wobei die Regelkennlinie das Ansteigen des Kühlluftbedarfs mit ansteigender Kühlgutbetthöhe bzw. Kühlgutbetttemperatur bzw. ansteigendem Kühlgutbett-Durchströmungswiderstand für den jeweiligen Kühlluftstrom (21) wiedergibt,
und wobei die Änderung der Regelkennlinie der Kühlluft-Volumenstromregler (22) durch eine mechanische Lageverstellung der innerhalb der kühlluftdurchströmten Reglergehäuse beweglich angeordneten Stellorgane (23) bewirkt wird, und wobei
das Schüttgut schrittweise nach dem Walking Floor-Förderprinzip durch den Kühler gefördert wird,
die Schüttgutbetthöhen auf den in Gutförderrichtung gesehen benachbarten Rostbahnen (A - E) gemessen und
die Messgrößen durch individuelle Ansteuerung der Antriebe der jeweiligen Kühlrostbahnen (A - E) zur gezielten Querverteilung des Schüttgutbetts über die gesamte Kühlerbreite verwendet werden.

2. Verfahren nach Anspruch 1, **dadurch gekennzeichnet, dass**
die Parameter Schüttgutbetthöhe, Schüttgutbetttemperatur und Durchströmungswiderstand in über die Länge und Breite des Kühlrostes verteilten Zonen (15-20 und A - E) gemessen werden.

3. Verfahren nach Anspruch 1 oder 2, **dadurch gekennzeichnet, dass**
die Kühlluft-Volumenströme in den jeweiligen Kühlrostzonen (15-20 und A - E) und/oder die Fördergeschwindigkeit des Rostkühlers durch eine Prozesssteuerung je nach Wärmeinhalt des Schüttgutbettabschnitts kühlungsbedarfsgerecht geregelt sind.

4. Verfahren nach einem der Ansprüche 1, 2 oder 3, **dadurch gekennzeichnet, dass**
bei einem Ansteigen der Parameter Betthöhe und/oder Betttemperatur und/oder Durchströmungswiderstand der jeweilige örtliche Kühlluft-Volumenstrom (21) erhöht wird, und umgekehrt, und dass bei einem Ansteigen der Betttemperatur insbesondere an der Bettoberseite die Fördergeschwindigkeit des Rostsystems reduziert wird, und umgekehrt.

5. Verfahren nach einem der Ansprüche 1 bis 4,**dadurch gekennzeichnet, dass**
die Regelkennlinien zur Regelung auch von im wesentlichen konstant bleibenden Kühlluft-Volumenströmen herangezogen werden.

6. Verfahren nach einem der Ansprüche 1 bis 5, **dadurch gekennzeichnet, dass**
repräsentativ für den Kühlluft-Durchströmungswiderstand die Druckdifferenz zwischen der Unterseite und der Oberseite der Kühlluft-Regelungsvorrichtungen unterhalb des Kühlrostes in den über die Länge und Breite des Kühlrostes verteilten Zonen (15 - 20 und A - E) gemessen wird.

## Claims

1. Method for regulating the operation of a bulk material grate cooler for cooling hot bulk material, for example cement clinker, which is moved from the bulk material input end to the bulk material output end by suitable conveying means,
in which the cooling grate (15-20) and the hot bulk material bed distributed thereon is passed through substantially from bottom to top by cooling air flows (21) which are regulated by regulating apparatuses (22) arranged underneath the cooling grate,
wherein, during operation of the grate cooler, a regulating intervention on the respective local cooling air volume flow (21) and on the respective local conveying rate of the cooling grate takes place in dependence on the respective local zonally measured bulk material bed height and/or bulk material bed temperature and/or of the cooling air flow resistance in such a way that in the event of a change in one or more of the measured parameters of bed height, bed temperature and flow resistance, the respective local cooling air volume flow and the conveying rate are changed,
**characterized in that**
the regulating characteristics of cooling air volume flow regulators (22) that are used are changed during cooler operation,
wherein the regulating characteristic represents the increase in the cooling air requirement with rising bed height or bed temperature of the material being cooled or rising flow resistance of the bed of material being cooled for the respective cooling air flow (21),
and wherein the change in the regulating characteristic of the cooling air volume flow regulators (22) is brought about by a mechanical adjustment in the position of the control elements (23) arranged movably within the regulator housing through which cooling air flows, and wherein
the bulk material is conveyed gradually through the cooler according to the walking floor conveying principle,
the bulk material bed heights are measured on the adjacent grate tracks (A-E) as seen in the material conveying direction, and
the measured variables are used for the targeted transverse distribution of the bulk material bed over the entire cooler width by way of individual actuation of the drives of the respective cooling grate tracks (A-E).

2. Method according to Claim 1, **characterized in that** the parameters of bulk material bed height, bulk material bed temperature and flow resistance are measured in zones (15-20 and A-E) distributed over the length and width of the cooling grate.

3. Method according to Claim 1 or 2, **characterized in that**
the cooling air volume flows in the respective cooling grate zones (15-20 and A-E) and/or the conveying rate of the grate cooler are regulated according to cooling requirements by a process controller depending on the heat content of the bulk material bed portion.

4. Method according to one of Claims 1, 2 and 3, **characterized in that**
in the case of a rise in the parameters of bed height and/or bed temperature and/or flow resistance, the respective local cooling air volume flow (21) is increased, and vice versa, and **in that** in the case of a rise in the bed temperature in particular on the bed top side, the conveying rate of the grate system is reduced, and vice versa.

5. Method according to one of Claims 1 to 4, **characterized in that**
the regulating characteristics are used also to regulate cooling air volume flows that remain substantially constant.

6. Method according to one of Claims 1 to 5, **characterized in that**
as a representative of the cooling air flow resistance, the pressure difference between the underside and the top side of the cooling air regulating apparatuses underneath the cooling grate is measured in the zones (15-20 and A-E) distributed over the length and width of the cooling grate.

## Revendications

1. Procédé pour réguler le fonctionnement d'un refroidisseur à grille de matières en vrac pour le refroidissement de matières en vrac chaudes, comme par exemple du clinker de ciment, qui est déplacé par des moyens de transport appropriés de l'extrémité d'entrée des matières en vrac à l'extrémité de sortie des matières en vrac,
dans lequel la grille de refroidissement (15-20) et le lit de matières en vrac chaudes distribué sur celle-ci sont traversés essentiellement du haut vers le bas par des courants d'air de refroidissement (21), qui sont régulés par des dispositifs de régulation (22) disposés en dessous de la grille de refroidissement,
dans lequel, pendant le fonctionnement du refroidisseur à grille, on effectue une intervention de régulation sur le courant volumique d'air de refroidissement local respectif (21) et sur la vitesse de transport locale respective de la grille de refroidissement en fonction de la hauteur du lit de matières en vrac et/ou de la température du lit de matières en vrac et/ou de la résistance à la traversée de l'air de refroidissement locales respectives mesurées par zones, de telle manière que,
lors d'un changement d'un ou de plusieurs des paramètres mesurés, hauteur du lit, température du lit et résistance à la traversée, on change le courant volumique d'air de refroidissement local respectif et la vitesse de transport locale respective,
**caractérisé en ce que**
les courbes caractéristiques de régulation des régulateurs de courant volumique d'air de refroidissement utilisés (22) peuvent être changées pendant le fonctionnement du refroidisseur,
dans lequel la courbe caractéristique de régulation reproduit la hausse de la demande d'air de refroidissement avec l'augmentation de la hauteur du lit de matières de refroidissement ou de la température du lit de matières de refroidissement ou de la résistance à la traversée du lit de matières de refroidissement pour le courant d'air de refroidissement respectif (21),
et dans lequel le changement de la courbe caractéristique de régulation des régulateurs de courant volumique d'air de refroidissement (22) est provoqué par un changement de position mécanique des organes de réglage (23) disposés de façon mobile à l'intérieur des boîtiers de régulateurs traversés par l'air de refroidissement, et dans lequel les matières en vrac sont transportées pas à pas à travers le refroidisseur selon le principe du plancher marchant,
on mesure les hauteurs de lit de matières en vrac sur les bandes de grille voisines (A - E) considérées dans la direction du transport des matières, et
on utilise les grandeurs de mesure par la commande individuelle des entraînements des bandes de grille de refroidissement respectives (A - E) pour la distribution transversale ciblée du lit de matières en vrac sur toute la largeur du refroidisseur.

2. Procédé selon la revendication 1, **caractérisé en ce que** l'on mesure les paramètres hauteur du lit de matières en vrac, température du lit de matières en vrac et résistance à la traversée dans des zones (15-20 et A - E) réparties sur la longueur et la largeur de la grille de refroidissement.

3. Procédé selon la revendication 1 ou 2, **caractérisé en ce que** les courants volumiques d'air de refroidissement dans les zones respectives (15 - 20 et A - E) de la grille de refroidissement et/ou la vitesse de transport du refroidisseur à grille sont régulés, en fonction de la demande de refroidissement, par une commande de processus selon le contenu thermique de la partie du lit de matières en vrac.

4. Procédé selon l'une quelconque des revendications 1, 2 ou 3, **caractérisé en ce que**, lors d'une augmentation des paramètres hauteur de lit et/ou température de lit et/ou résistance à la traversée, on augmente le courant volumique d'air de refroidissement local respectif (21), et inversement, et **en ce que**, lors d'une augmentation de la température du lit, en particulier à la face supérieure du lit, on réduit la vitesse de transport du système de grille, et inversement.

5. Procédé selon l'une quelconque des revendications 1 à 4, **caractérisé en ce que** l'on utilise les courbes caractéristiques de régulation pour la régulation même de courants volumiques d'air de refroidissement restant essentiellement constants.

6. Procédé selon l'une quelconque des revendications 1 à 5, **caractérisé en ce que** l'on mesure la différence de pression, représentative de la résistance à la traversée de l'air de refroidissement, entre la face inférieure et la face supérieure des dispositifs de régulation de l'air de refroidissement en dessous de la grille de refroidissement dans les zones (15 - 20 et A - E) réparties sur la longueur et la largeur de la grille de refroidissement.
